# EUROPEAN PATENT APPLICATION

(11) **EP 2 469 978 A1**
(43) Date of publication of application: **27.06.2012**
(21) Application number: 10196524.2
(22) Date of filing: 22.12.2010
(51) Int. Cl.: H05B 33/08, B60Q 11/00

(54) **Vehicle energy retrieving device**

(71) Applicant: Long Jing International Technology Enterprise Co., Ltd., Yongkang City (TW)
(72) Inventor: Lee, Hao-An, Yongkang City (TW)
(74) Representative: Viering, Jentschura & Partner

(57) **Abstract**

The vehicle energy retrieving device includes an input current detection circuit (41), a boost converter circuit (42), an output voltage detection circuit (43), a power source (1) and a load end (3). The input current detection circuit (41) controls input current and the boost converter circuit (42) is electrically connected to the input current detection circuit (41) in series and converts low voltage into high voltage. The output voltage detection circuit (43) controls output voltage when the circuit is an open circuit. The vehicle energy retrieving device retrieves the surplus electric power and recharges the surplus electric power to the power source (1) to improve the shortcomings of the conventional driving computer system so that when braking or driving, the driving computer system (2) does not generate any false signals.

## Description

### FIELD OF THE INVENTION

The present invention relates to an energy retrieving device, and more particularly, to a vehicle energy retrieving device for recharging back the plus electric current.

### BACKGROUND OF THE INVENTION

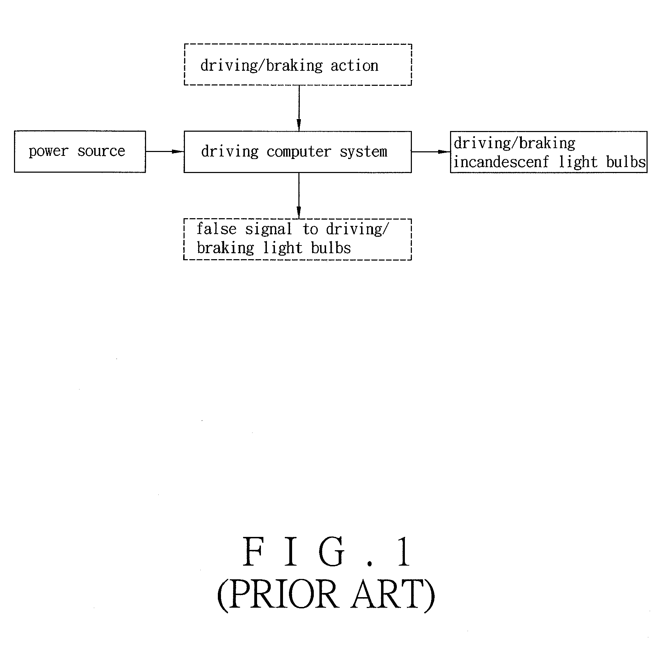

The conventional incandescent light bulbs used on the head lights or the tail lights of vehicles as shown in Fig. 1 lost most of the energy and generate significant heat to reduce the life of the head lights or the tail lights. The Light Emitting Diodes (LED) light bulbs are developed to have high efficiency and low lost of energy. The brightness and illumination of the LED light bulbs are much better than the conventional incandescent light bulbs, and the life of the LED light bulbs are much longer than the conventional incandescent light bulbs. Therefore, many users change their head lights and tail lights with the conventional incandescent light bulbs into the LED light bulbs. Nevertheless, the LED light bulbs require limited current, so that the low current may wrongly detected by the driving computer system as a failure signal which disturbs the users.

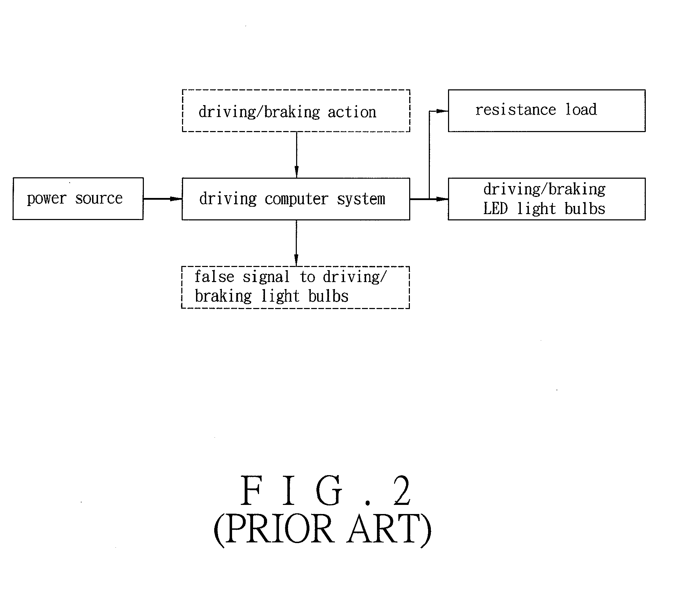

In order to improve the situations, the LED light bulbs are connected in series with a resistance as shown in Fig. 2 to provide sufficient load current to prevent from generating failure signals by the driving computer system. Taiwan Published Patent No. M317955 discloses a vehicle head light circuit, which includes an LED head light circuit and a braking control circuit. The LED head light circuit includes an LED light bulbs unit and a load circuit corresponding to the LED light bulbs. The braking control circuit includes a control circuit and a braking system. The LED light bulbs are connected to the corresponding load circuit to increase the load current passing through the LED head light circuit such that the control circuit of the braking system can precisely detect the load current of the LED head light circuit and thereby avoiding from generating false signals.

However, surplus of the electric power of the load circuit is consumed in the form of heat which affects the life of the head light and the surplus current does not provide any function or work.

The present invention intends to provide a vehicle energy retrieving device for recharging back the plus electric current.

### SUMMARY OF THE INVENTION

The present invention relates to a vehicle energy retrieving device which comprises an energy retrieving unit, a power source and a load end. The power source provides power to the whole device and the load end is electrically connected to the power source in series. The energy retrieving unit comprises an input current detection circuit, a boost converter circuit and an output voltage detection circuit. The input current detection circuit is electrically connected to the boost converter circuit in series, and the boost converter circuit is electrically connected to the output voltage detection circuit in series. The energy retrieving unit includes an input point and an output point on two sides thereof. The input point is located close to the input current detection circuit and the output point is located close to the output voltage detection circuit. The input point and the output point of the energy retrieving unit are electrically connected to the power source in series.

Preferably, the vehicle energy retrieving device further comprises a driving computer system which is electrically connected between the load end and the input joint of the energy retrieving unit in series so as to detect load current passing through the driving computer system.

The input current detection circuit, the boost converter circuit and the output voltage detection circuit are formed on a digital control IC.

The primary object of the present invention is to provide a vehicle energy retrieving device which retrieves surplus load current and recharges the surplus load current back to the power source.

The vehicle energy retrieving device uses LED light bulbs to prolong the life of the head lights and tail lights.

The vehicle energy retrieving device avoids the driving computer system from generating false signals because of the small amount load current.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows the block diagram of the conventional braking and driving control device using incandescent light bulbs;
Fig. 2 shows the block diagram of the conventional braking and driving control device using LED light bulbs;
Fig. 3 shows the block diagram of the braking and driving control device of the present invention using LED light bulbs and the vehicle energy retrieving device of the present invention;
Fig. 4 shows the block diagram of the braking and driving control device of the present invention using LED light bulbs, and
Fig. 5 shows the circuit diagram of the braking and driving control device of the present invention using LED light bulbs.

### DETAILED DESCRIPTION OF THE PREFERRED EMBODIMENT

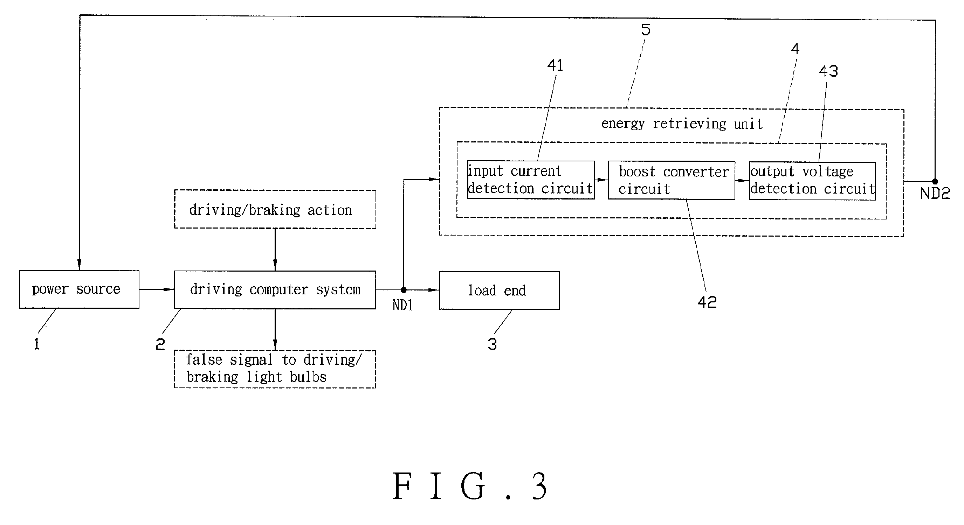

As shown in Fig. 3, the block diagram of the braking and driving control device of the present invention using LED light bulbs and the vehicle energy retrieving device of the present invention are shown. The vehicle energy retrieving device comprises a power source 1 which provides the electric power to the whole device. A driving computer system 2 is electrically connected to the power source 1 so as to detect load current passing through the driving computer system 2. A load end 3 is electrically connected to the driving computer system 2 in series. The load end 3 is an LED light bulb which has limited work lost and has longer life of use. A digital control IC 4 includes an input current detection circuit 41, a boost converter circuit 42 and an output voltage detection circuit 43. The input current detection circuit 41 is electrically connected to the boost converter circuit 42 in series and the boost converter circuit 42 is electrically connected to the output voltage detection circuit 43 in series. An energy retrieving unit 5 includes the digital control IC 4. The energy retrieving unit 5 includes an input point ND1 and an output point ND2 on two sides thereof. The input point ND1 is located close to the input current detection circuit 41 and the output point ND2 is located close to the output voltage detection circuit 43. The input point ND1 is electrically connected to the driving computer system 2 and the output point ND2 is electrically connected to the power source 1 in series. The input current detection circuit 41 controls input current of the energy retrieving unit 5. The output voltage detection circuit 43 controls output voltage of the energy retrieving unit 5. The input current detection circuit 41 and the output voltage detection circuit 43 detect sufficient or not of the current and voltage passing through the energy retrieving unit 5 so as to charge the power source 1.

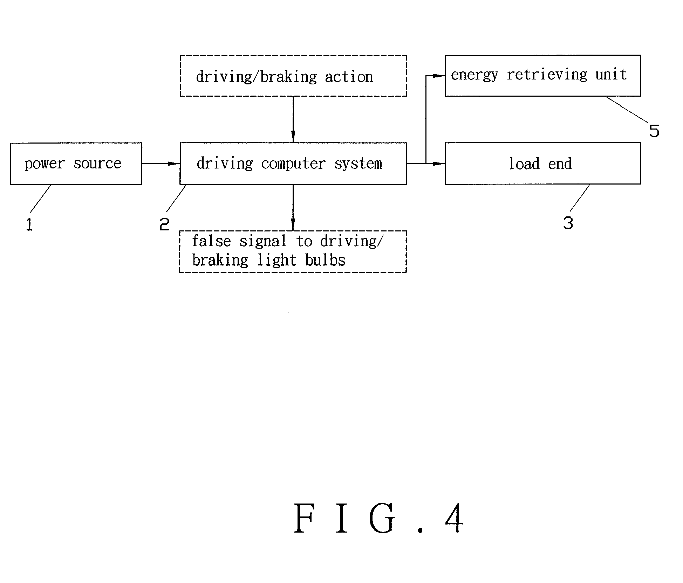

As shown in Fig. 4, which shows that the resistance load is replaced with the energy retrieving unit 5 so that the surplus current passing through the load end can be retrieved and re-used by the energy retrieving unit 5. Therefore, the life of the head light and tail light can be prolonged.

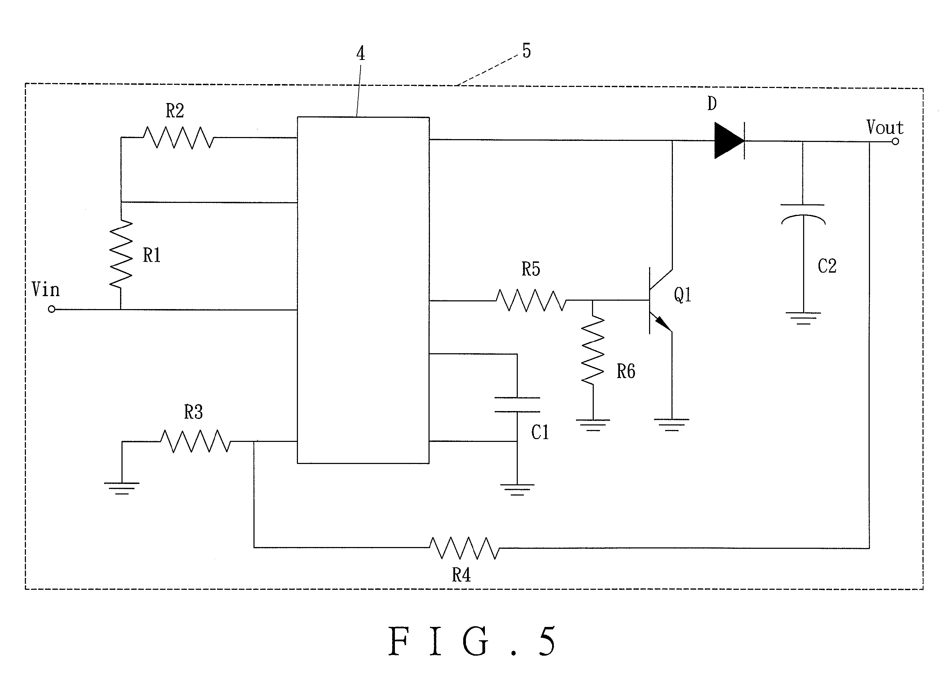

As shown in Fig. 5, which shows the circuit diagram of the braking and driving control device of the present invention using LED light bulbs, wherein the input current detection circuit 41, the boost converter circuit 42 and the output voltage detection circuit 43 are formed on the digital control IC 4. The digital control IC 4 is composed of six resistances R1, R2, R3, R4, R5, R6, two capacitors C1, C2, a transistor Q1 and a Diode D. The difference of voltage between the input point ND1 and the output point ND2 of the energy retrieving unit 5 is larger than the voltage of the power source 1, so that the surplus current, instead of the load current of the load end 3 of the LED light bulbs, is transferred to the power source 1 via the output point ND2 of the energy retrieving unit 5 to form a circuit to perform the recharging process. The surplus current is then saved and re-used. By the surplus current provided by the energy retrieving unit 5, the load current reaches the pre-set value of the detection level of the driving computer system 2. Therefore, the driving computer system 2 does not generate false signals on the dash board.

While we have shown and described the embodiment in accordance with the present invention, it should be clear to those skilled in the art that further embodiments may be made without departing from the scope of the present invention.

## Claims

1. A vehicle energy retrieving device comprising a power source (1) and a load end (3), the power source (1) providing electric power, the load end (3) being electrically connected to the power source (1), and **characterized by**:
the vehicle energy retrieving device further comprising an energy retrieving unit (5), the energy retrieving unit (5) comprising an input current detection circuit (41), a boost converter circuit (42) and an output voltage detection circuit (43), the energy retrieving unit (5) including an input point (ND1) and an output point (ND2) on two sides thereof, the input point (ND1) being located close to the input current detection circuit (41) and the output point (ND2) being located close to the output voltage detection circuit (43), the input point (ND1) and the output point (ND2) of the energy retrieving unit (5) being electrically connected to the power source (1), the load end (3) being electrically connected to the input point (ND1) and connected to the energy retrieving unit (5) in parallel, the input current detection circuit (41) controlling input current, the boost converter circuit (42) being electrically connected to the input current detection circuit (41) and converting low voltage into high voltage, the output voltage detection circuit (43) being electrically connected to the boost convert circuit (42) and controlling output voltage when the circuit is an open circuit.

2. The device as claimed in claim 1, wherein the input current detection circuit (41) is electrically connected to the boost converter circuit (42) in series and the boost converter circuit (42) is electrically connected to the output voltage detection circuit (43) in series.

3. The device as claimed in claim 1, wherein the input current detection circuit (41), the boost converter circuit (42) and the output voltage detection circuit (43) are formed on a digital control IC (4).

4. The device as claimed in claim 1, further comprising a driving computer system (2) which is electrically connected between the load end (3) and the input joint (ND1) of the energy retrieving unit (5) in series so as to detect load current passing through the driving computer system (2).

## Amended claims

### Amended claims in accordance with Rule 137(2) EPC.

**1.** A vehicle energy retrieving device comprising a power source (1) and a load end (3), the power source (1) providing electric power, the load end (3) being electrically connected to the power source (1), and **characterized by**:
the vehicle energy retrieving device further comprising an energy retrieving unit (5), the energy retrieving unit (5) comprising an input current detection circuit (41), a boost converter circuit (42) and an output voltage detection circuit (43), the energy retrieving unit (5) including an input point (ND1) and an output point (ND2) on two sides thereof, the input point (ND1) being located close to the input current detection circuit (41) and the output point (ND2) being located close to the output voltage detection circuit (43), the input point (ND1) and the output point (ND2) of the energy retrieving unit (5) being electrically connected to the power source (1), the load end (3) being electrically connected to the input point (ND1) and connected to the energy retrieving unit (5) in parallel, the input current detection circuit (41) controlling input current, the boost converter circuit (42) being electrically connected to the input current detection circuit (41) and converting low voltage into high voltage, the output voltage detection circuit (43) being electrically connected to the boost convert circuit (42) and controlling output voltage when the circuit is an open circuit;
wherein the input current detection circuit (41) is electrically connected to the boost converter circuit (42) in series and the boost converter circuit (42) is electrically connected to the output voltage detection circuit (43) in series;
wherein the input current detection circuit (41), the boost converter circuit (42) and the output voltage detection circuit (43) are formed on a digital control IC (4), and the digital control IC is composed of six resistances (R1, R2, R3, R4, R5, R6), two capacitors (C1, C2), a transistor (Q1) and a Diode (D).

**2.** The device as claimed in claim 1, further comprising a driving computer system (2) which is electrically connected between the load end (3) and the input joint (ND1) of the energy retrieving unit (5) in series so as to detect load current passing through the driving computer system (2).
